# FASCICULE DE BREVET EUROPEEN

(11) **EP 1 249 959 B1**
(45) Date de publication et mention de la délivrance du brevet: **28.07.2004**
(21) Numéro de dépôt: 02100367.8
(22) Date de dépôt: 11.04.2002
(51) Int. Cl.: H04L 1/16, H04L 1/18, H04L 29/06

(54) **Procédé de diffusion d'informations multimédia dans un réseau cellulaire et une utilisation du procédé**
Verfahren zur Mehrfachsendung von Multimediainformationen in einem zellularen Mobilfunknetz und seine Verwendung
Method for multicasting multimedia information in a cellular network and use thereof

(30) Priorité: 11.04.2001 FR 0105000
(43) Date de publication de la demande: 16.10.2002
(73) Titulaire: SAGEM SA, 75015 Paris (FR)
(72) Inventeur: Heurtaux, Frédéric, 13610 Le Puy Ste Reparade (FR); Nicaise, Pierre, 60580 Coye la Foret (FR); Alos, Rafael, 95520 Osny (FR); Rosa, Laurent, 95450 Sagy (FR)
(74) Mandataire: Schmit, Christian Norbert Marie

(56) Documents cités:
- EP-A- 1 061 688
- WO-A-99/52304
- US-A- 4 975 952
- US-A- 5 636 230
- DE LIMA H M ET AL: "Point-to-multipoint SR ARQ scheme with accumulative acknowledgment for satellite communications" COMPUTER NETWORKS AND ISDN SYSTEMS, NORTH HOLLAND PUBLISHING. AMSTERDAM, NL, vol. 30, no. 14, 31 août 1998 (1998-08-31), pages 1311-1325, XP004147414 ISSN: 0169-7552

## Description

La présente invention a pour objet un procédé de diffusion d'informations multimédia dans un réseau cellulaire, et une utilisation du procédé. Le domaine de l'invention et celui du réseau cellulaire, et plus particulièrement celui de la téléphonie mobile.

Un but de l'invention est de réaliser une diffusion d'informations multimédia à un grand nombre de terminaux, de préférence des téléphones mobiles, connectés à un réseau cellulaire. Un autre but de l'invention est de réaliser une diffusion en minimisant les moyens de communication, en particulier radio, à utiliser. Un autre but de l'invention est de s'assurer que l'ensemble des informations multimédia diffusées on été correctement reçu par l'ensemble des terminaux connectés au réseau cellulaire. Un autre but de l'invention est de limiter des moyens de communication radio utilisés pour effectuer la vérification.

Dans l'état de la technique, on connaît des procédés de diffusion d'informations multimédia. En particulier on connaît des procédés de diffusion des signaux de télévision, qui comportent bien des informations multimédia. Cependant des tels procédés sont totalement inadaptés à un réseau cellulaire pour terminaux mobiles. En effet, tous ces procédés proposent l'utilisation d'un moyen pour capter des signaux comportant l'information multimédia. Ce moyen est en général une antenne. Cette antenne doit alors être pointée en direction de la source du signal. Une fois cette opération de pointage réalisée, les paramètres de transmission, c'est à dire la qualité du signal qui va arriver jusqu'à l'antenne ne variera plus. On peut citer par exemple des antennes paraboliques pointées vers un satellite. Un procédé de l'état de la technique utilise alors un boîtier récepteur décodeur de signal télévision qui est connecté à l'antenne et transforme les signaux reçus par l'antenne en signaux visualisables sur un écran de télévision. L'ensemble récepteur/décodeur plus écran de télévision forme un dispositif dont le poids est rarement inférieur à une dizaine de kilo. Un tel dispositif est donc absolument pas comparable à un terminal d'un réseau cellulaire de téléphonie mobile.

De plus, un tel dispositif dispose, comme on a vu, de condition de transmission de signaux optimum, et stable. Les pertes d'informations pendant la transmission des signaux sont donc faibles et l'emploi d'un code correcteur d'erreur suffit à les corriger. L'emploi d'un tel procédé de diffusion et alors inadapté à l'environnement qui existe dans les réseaux cellulaires pour terminaux mobiles. En effet, dans de tels réseaux cellulaires pour terminaux mobiles, les conditions de réception varient fréquemment et de manière souvent brutale. Réalisé de la diffusion d'informations multimédia, c'est à dire de quantité d'informations importantes, dans un tel réseau cellulaire nécessiterais donc la mise en place de moyens de contrôle d'erreur qui ne sont absolument pas prévues dans les systèmes de diffusion existant dans l'état de la technique.

Dans l'état de la technique on connaît aussi le document EP 1 061 688 A2.

Dans l'invention on résout ces problèmes, d'une part en utilisant un canal initialement prévu pour faire une communication point à point afin de réaliser une communication point multi-points, d'autre part en établissant plusieurs communications point à point entre des terminaux du réseau cellulaire et un serveur de diffusion.

On dit qu'on établit un canal de diffusion dédié. C'est à dire, on alloue de ressource radio pour la diffusion. Les différents terminaux connectés au réseau cellulaire sont alors capables de reconnaître les moyens alloués pour cette diffusion. Ces moyens sont par exemple un ou plusieurs canaux de communication du type GSM dans le cas d'un réseau cellulaire GSM.

Ainsi, chaque terminal du réseau souhaitant recevoir les informations multimédia diffusées, reconnaît les moyens radio alloués à cette diffusion sur la station base à laquelle il est connecté, puis il enregistre les informations diffusées. On rappel qu'en mode TDMA (Accès multiple de la division dans le temps) un canal est défini par une loi de fréquence ainsi que des dates à laquelle les fréquences appartenant à la loi de fréquence sont utilisables soit pour recevoir soit pour émettre. Un tel canal dédié à la diffusion selon l'invention, est par la suite appelé canal MBC pour Multimédia Broadcasting Canal, ou canal de diffusion multimédia.

Le canal MBC permet de véhiculer, du serveur de diffusion vers les terminaux du réseau cellulaire, des paquets d'informations multimédia, encapsulés dans des messages d'informations correspondant à des morceaux d'une séquence multimédia. Une séquence multimédia est alors soit une vidéo, soit une séquence sonore, c'est à dire soit un fichier au format, par exemple, M PEG soit un fichier au format MP3.

Les messages d'informations sont alors reçus sur un terminal du réseau cellulaire, et les informations que comporte ce message sont extraites. Le terminal vérifie alors la validité de ce message. Cette vérification est par exemple effectuée à l'aide d'un code correcteur d'erreur. Si cette vérification conduit à la conclusion que le contenu du message n'est pas correct, alors le terminal émet, à destination du serveur de diffusion, un message de statut indiquant qu'un message, à été mal reçu. Le message de statut comporte l'identifiant du message de diffusion mal reçu.

Le serveur de diffusion, en plus de la diffusion, reçoit les messages de statut. Le serveur de diffusion peut ainsi réémettre les messages de diffusion ayant été mal reçu par différents terminaux du réseau cellulaire. De plus, le serveur de diffusion évalue la qualité de la réception par les terminaux. C'est-à-dire, si un terminal redemande trop souvent de réémettre des messages, le serveur de diffusion décide que les demandes de ce terminal pour des rediffusions doivent être ignorées.

L'invention a donc pour objet un procédé de diffusion de séquences multimédia dans un réseau cellulaire pour terminaux mobiles dans lequel :
- un serveur de diffusion produit des paquets d'information multimédia à partir d'une séquence multimédia,
caractérisé en ce que :
- le serveur 104 diffuse (205), vers des terminaux du réseau cellulaire, des messages (401) d'informations multimédia, via un canal MBC dédié et identifiable via une séquence particulière présente uniquement sur ce canal, ces messages d'informations comportant un paquet (404) d'information multimédia,
- le serveur reçoit, un message, émis par un terminal du réseau cellulaire, de statut de réception d'un paquet d'information multimédia.

L'invention a aussi pour objet un procédé de réception de séquences multimédia dans un réseau cellulaire pour terminaux mobiles caractérisé en ce que :
- un terminal mobile connecté au réseau identifie, un canal MBC dédié la diffusion de séquences multimédia et identifiable via une séquence particulière qu'il comporte,
- le terminal enregistre dans une mémoire du terminal connecté au réseau cellulaire un paquet d'information multimédia, reçu via le réseau cellulaire, et plus particulièrement reçu via le canal MBC dédié de ce réseau cellulaire, le paquet d'information étant contenu dans un message d'information émis par un serveur de diffusion,
- le terminal vérifie l'intégrité du paquet d'information multimédia enregistré,
- le terminal émet, vers le serveur de diffusion, un message de statut pour un paquet d'information multimédia mal reçu.

L'invention a enfin pour objet l'utilisation du procédé selon au moins l'un des paragraphes précédent, caractérisé en ce que :
- le serveur de diffusion effectue la diffusion via au moins un canal de communication, dédié et identifiable via une séquence particulière, du réseau cellulaire,
- le terminal émet des messages de statut via un support physique de type GPRS, et selon un protocole de type IP.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration des moyens utiles à la mise en oeuvre du procédé selon l'invention.
- Figure 2 : une illustration d'étapes du procédé selon l'invention mises en oeuvre par un serveur de diffusion ;
- Figure 3 : une illustration d'étape du procédé selon l'invention mises en oeuvre par un terminal d'un réseau cellulaire ;
- Figure 4: une illustration d'une structure possible d'un message de diffusion et de son insertion dans des trames de transport GSM ;
- Figure 5: une illustration d'une structure possible d'un message de statut.

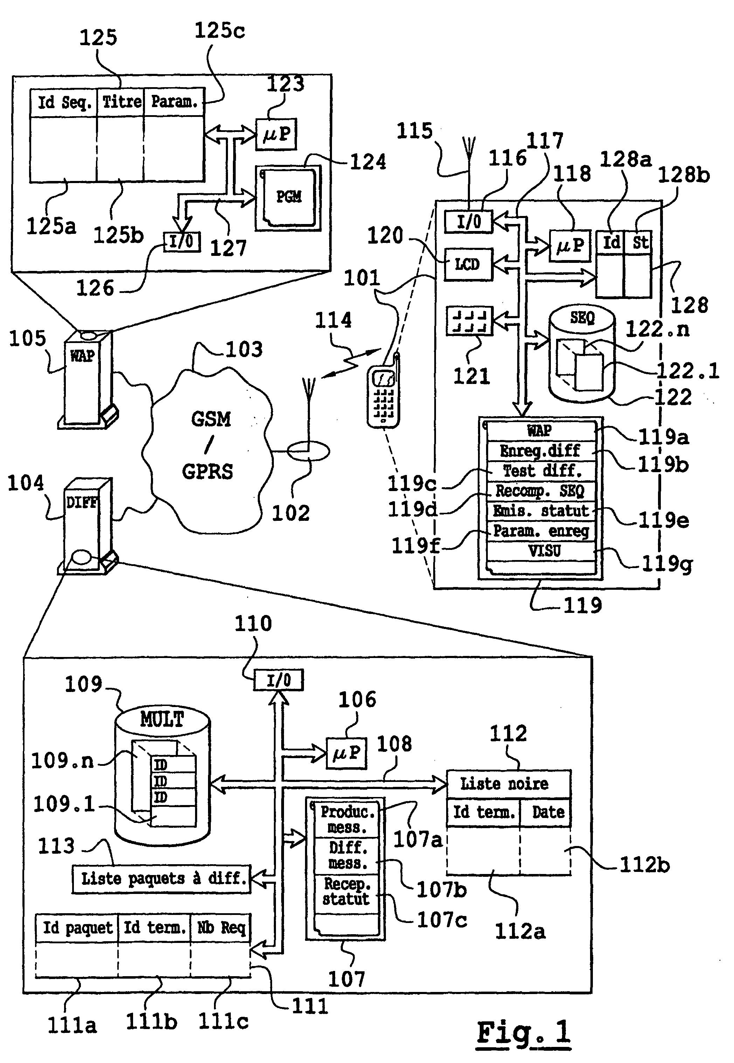

La figure 1 montre une architecture de réseau cellulaire de type réseau GSM. L'enseignement de l'invention reste valable pour d'autres types de réseaux cellulaires, comme par exemple des réseaux UMTS, PCS, DCS ou autres.
La figure 1 montre un terminal 101, de préférence un téléphone mobile 101, connecté à une station 102 de base d'un réseau cellulaire de téléphonie mobile 103 de type GSM. Un serveur 104 de diffusion est lui aussi connecté au réseau 103, ainsi qu'un serveur 105 de type WAP (Wireless Application Protocol, soit protocole pour application sans fil).

Le serveur 104 comporte un microprocesseur 106 qui exécute des codes instruction enregistrés dans une mémoire 107. Dans la description le fait de prêter une action à un appareil doit être compris comme l'exécution, par un microprocesseur de cet appareil, de codes instruction enregistrés dans une mémoire de cet appareil. Le microprocesseur 106 et la mémoire 107 sont connectés via un bus 108. Un bus est un ensemble de fils ou de pistes, comportant les éléments en nombre suffisants, permettant de véhiculer des signaux d'adresses, de commandes, de données, d'interruptions, d'horloges et d'alimentation.

La mémoire 107 comporte plusieurs zones. Une zone 107a comporte des codes instruction qui commandent le microprocesseur lorsque celui-ci effectue des actions de production de messages de diffusion. Les messages de diffusion sont produits à partir du contenu d'une mémoire 109 de stockage elle aussi connectée au bus 106. La mémoire 109 comporte des séquences 109.1a 109.N multimédia. Une séquence multimédia est, par exemple, un fichier comportant des informations vidéo et/ou des informations sonore. Un tel fichier est par exemple un fichier au format MPEG (Moving Pictures Experte Groupe, groupe d'experts pour les images animées), ou plus simplement à un fichier sonore.

Une autre zone 107b comporte des codes instruction qui commande le microprocesseur 106 lorsque celui-ci diffuse les messages de diffusion. Pour diffuser un message de diffusion, le microprocesseur 106 transmet, via le bus 108, les dit messages de diffusion à des circuits 110 d'entrée/sortie. Le rôle des circuits 110 est d'assurer l'interface entre le serveur 104 de diffusion et le réseau 103. Les circuits 110 sont donc une interface Ethernet, une interface 6 25, une interface RNIS ou autres interfaces permettant d'établir une communication, commutée ou non, entre le serveur 104 et des stations de base de type de la station 102. Le rôle des circuits 110 est donc d'effectuer une conversion, physique, entre les signaux véhiculés par le réseau 103, et les signaux véhiculés par le bus 108.

Une zone 107c comporte des codes instruction qui commandent le microprocesseur 106 lorsque celui-ci gère la réception de messages de statut. Un message de statut est envoyé par le terminal de type le terminal 101. Le message de statut comporte différentes zones correspondant à des informations identifiant l'émetteur de message, ainsi que des informations identifiant le statut. Les codes instruction de la zone 107c permet donc au microprocesseur 106 de gérer la mise à jour d'une mémoire 111 historique des messages de statut, d'une mémoire 112 liste noire, et d'une mémoire 113 comportant une liste des paquets d'information multimédia à diffuser. Un paquet d'information multimédia, ou paquet dans la description, est un morceau d'une séquence multimédia. Les mémoires 111 à 113 sont-elles aussi connectées au bus 106.

La mémoire 111 est structurée en table comportant des lignes et des colonnes. Chaque ligne correspond à un paquet et à un terminal. Chaque ligne comporte donc des informations relatives aux demandes de réémission d'un paquet par un terminal. La table 111 comporte donc une colonne 111a correspondant à un identifiant de paquet, une colonne 111b correspondant à un identifiant de terminal et une colonne 111c correspondant à un nombre de messages de statut, issus du terminal, ayant pour objet le paquet. L'identifiant du paquet est, par exemple, un numéro, unique, affecté lors du découpage d'une séquence multimédia en paquet par le microprocesseur 106.

La mémoire 112 est structurée en table. Chaque ligne correspond à un terminal. La mémoire 112 comporte une colonne 112a correspondant à un identifiant de terminal et une colonne 112b correspondant à une date. La date correspond à la date à laquelle le terminal est entré dans la liste noire. Les messages de statut issus d'un terminal dont l'identifiant est dans la liste noire sont ignorés par le serveur 104.

Un terminal entre dans la liste noire, par exemple, lorsqu'il émet trop de messages de statut pour un même paquet. Par exemple, si un même terminal demande cinq fois la réémission d'un même paquet, on considère que ses conditions de réception ne sont pas acceptables, par rapport à la charge du réseau, et que les demande de réemissions qu'il envoie, ne doivent plus être prises en compte. Ce terminal est alors placé dans la liste noire. Un terminal peut sortir de la liste noire, par exemple, après un certain temps, d'où l'utilité de la date d'entrée dans la liste noire. Dans une variante, un terminal entre dans la liste noire si le nombre de messages de statut qu'il émet est trop important, par exemple supérieur à 100. Dans ce cas un nombre de messages de statut supérieurs à 5, pour un terminal et un paquet, ne provoque une inscription dans la liste noire. Cependant les messages de statut suivant concernant ce paquet sont ignorés.

La mémoire 113 comporte en faite une liste d'identifiant, permettant d'identifier des paquets de séquences multimédia, qui doivent être envoyés par le serveur 104. Chaque fois qu'un paquet à été envoyé l'identifiant est sorti de la liste. Lorsqu'on souhaite émettre ou réémettre un paquet, il suffit donc d'inscrire son identifiant dans la mémoire 113. Cet identifiant, suivant qu'il s'agit d'une émission ou d'une réémission, est écrit à une position qui est soit la fin, soit le début, ou proche du début, de la mémoire 113. En effet, les réémissions doivent s'intercaler parmi les émissions. Une nouvelle émission sera donc mise à la fin de la liste, alors une réémission sera plutôt mise vers le début de la liste.

Le téléphone 101 établi une liaison 114 hertzienne avec la station 102 de base. Le téléphone 101 comporte donc une antenne 115 connectée à des circuits 116. Les circuits 116 sont d'autre part connectés à un bus 117. Le rôle des circuits 116 est d'effectuer la conversion, physique, entre des formats de signaux utilisés pour la liaison 114 et des formats de signaux utilisés sur le bus 117.

Le téléphone 101 comporte aussi un microprocesseur 118 qui exécute des codes instruction enregistrés dans une mémoire 119. Le téléphone 101 comporte aussi un écran 120 ainsi qu'un clavier 121. Les éléments 118 à 121 sont connectés au bus 117. La mémoire 119 comporte une zone 119a qui comporte des codes instruction qui permettant au téléphone 101 de se connecter à des sites, héberger sur des serveurs, au format WAP.

Une zone 119b comporte des codes instructions pour pouvoir enregistrer les messages de diffusion. Une zone 119c comporte des codes instruction qui permet de tester la validité des messages de diffusion. En effet, une structure classique pour un message de diffusion est un entête, une zone de donnée et une zone de contrôle de validé des données. Cette zone de contrôle peut par exemple être constituée par un CRC (Check redundancy code, ou code redondant de test). Ce code permet de déterminer si les données transmises par le message sont reçues telles qu'elles ont été émises.

Une zone 119d comporte des codes instruction qui permettent au microprocesseur 118 de reconstituer la séquence vidéo qui est, on le rappelle, transmise par paquet via plusieurs messages de diffusion. Ces paquets, une fois enregistrés dans une mémoire temporaire du téléphone 118, et testés, sont écrits au fur et à mesure dans une mémoire 122 de stockage. La mémoire 122 est connectée au bus 117. La mémoire 122 comporte les séquences multimédia 122.I à 122.N enregistrées par le téléphone 101.

Une zone 119e comporte des codes instructions qui permettent au téléphone 101 d'émettre des messages de statut. Si le résultat du teste de validité des données du message n'est pas concluant, un message de statut est émis pour demander la réémission du message du diffusion correspondant aux données invalides. Une zone 119f comporte des codes instruction qui permettent de paramétrer l'enregistrement des séquences multimédia. Les codes instruction de la zone 119f sont utilisés conjointement avec les codes instruction de la zone 119a. En effet, les paramètres permettant d'effectuer un enregistrement d'une séquence multimédia sont obtenus, par exemple, via un site WAP présentant les différentes séquences multimédia qui l'est possible d'enregistrer.

Une zone 119g comporte des codes instruction permettant la visualisation des séquences multimédia. La zone 119g comporte par exemple, un algorithme de décryptage permettant de transcrire en claire la séquence multimédia, à condition que l'utilisateur du téléphone 101 ait acquis la clef permettant le décryptage.

La figure 1 montre que le serveur 105 comporte un microprocesseur 123, une mémoire de programme 124, une mémoire 125 de présentation de séquence multimédia des circuits 126 interface entre un bus 127 et le réseau 103. Les éléments 124 et 125 sont connectés au bus 127. La mémoire 125 est structurée en table. Chaque ligne de la table correspond à une séquence multimédia. La table 125 comporte une colonne 125a correspondant à un identifiant de séquence une colonne 125b correspondant à un titre de séquence et une colonne 125c permettant à des paramètres pour enregistrer la séquence. L'utilisateur du téléphone 101 peut donc se connecter à un site hébergé par le serveur 105 pour consulter la liste des séquences multimédia qui est possible d'enregistrer, en sélectionner une et ainsi rapatrier les paramètres permettant d'effectuer cet enregistrement.

On note, que le serveur 105 et le serveur 104 peuvent très bien âtre qu'une seule et même machine. On note aussi, qu'il peut y avoir plusieurs serveurs du type 105 ainsi que plusieurs serveurs du type 104.

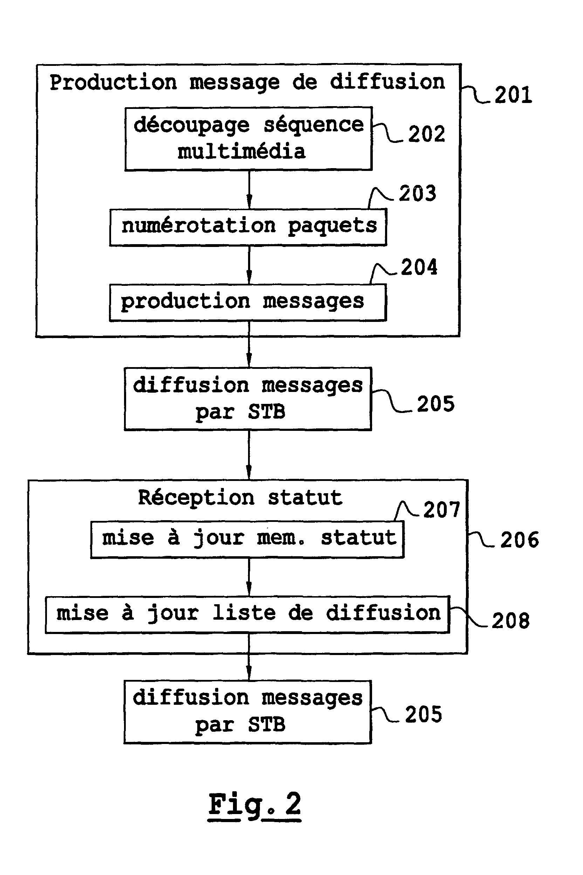

La figure 2 montre des étapes du procédé de l'invention exécutées par le serveur 104 de diffusion. La figure 2 montre une étape 201 préliminaire de production des messages de diffusion. L'étape 201 correspond au code d'instruction de la zone 107a. Dans l'étape 201 le microprocesseur 106 effectue une première étape 202 de découpage d'une séquence multimédia en paquet d'information. Ces paquets d'informations ont, par exemple, une taille de 1 kilo octets. Cela signifie que, si une séquence multimédia, par exemple vidéo, a une taille de 4 méga octets, cette séquence multimédia sera découpée en quatre mille paquets d'information. Chacun de ces paquets d'information sera alors identifié par un identifiant permettant de le distinguer parmi tous les paquets d'information que produit le serveur 104. On utilise par exemple un identifiant codé sur 16 ou 32 octets permettant d'identifier un paquet d'information multimédia. De plus, dans une variante l'identifiant a une durée de vie. Cela signifie qu'un identifiant ID, correspond à un paquet d'information multimédia entre des dates T1 et T2. Il s'agit de l'étape 203 de numérotation des paquets.

On passe ensuite à une étape 204 de production des messages. L'étape 204 recouvre deux choses. Une première est la mise à jour de la mémoire 113 comportant la liste des paquets à diffuser. En effet, lorsque le microprocesseur 106 a découpé une séquence multimédia qu'il doit diffuser en paquets, et aussi numéroté ces paquets, il écrit la liste des tous les numéros dans la liste 113 des paquets à diffuser. La mémoire 113 est un moyen simple, mais pas le seul moyen, de contrôler la diffusion des paquets multimédia. Le microprocesseur 106 lit donc en permanence le contenu de la mémoire 113 pour savoir s'il doit diffuser un paquet. Si la mémoire 113 comporte des numéros de paquets, il lit le premier numéro de paquet, va chercher le paquet correspondant dans la mémoire 109 et produit un message de diffusion. Un message 401 de diffusion comporte un entête 402, un corps 404 et des moyens 408 de vérification de la bonne transmission du corps. Un corps correctement transmis est tel que les moyens de vérification appliqués au corps reçu correspondant au moyen de vérification appliqué au corps qui à était émis. Il s'agit typiquement du calcul d'une somme de redondance.

Un message de diffusion comporte aussi un identifiant d'un destinataire, ainsi qu'une indication selon laquelle il s'agit d'un message de diffusion d'information multimédia dans un réseau cellulaire. Dans l'invention l'identifiant du destinataire correspond en faite à l'ensemble, ou à un certain nombre, de station de base du réseau cellulaire. L'information sur la nature du message indiquera à la station de base ce qu'elle doit faire de ce message.

Ici on considère que la liaison entre le serveur 104 et la station de base 102 est de type IP (Internet Protocol, ou protocole Internet) alors l'adresse de destination, des messages de diffusion, est une adresse correspondant à un ensemble des stations de base du réseau cellulaire. De plus, le message IP, aussi connue sous le nom de trame IP, comporte un champ indiquant à la station de base qu'il s'agit d'un message de diffusion d'une séquence multimédia dans un réseau cellulaire pour terminaux mobile.

Le message de diffusion comporte aussi, par exemple dans l'entête, le numéro identifiant du paquet que comporte le corps du message.

On passe à une étape 205 de diffusion des messages de diffusion par les stations de base. Dans notre exemple, on considère la station de base 102. Pour la diffusion des messages de diffusion que la station de base reçoit du serveur 104, la station de base 102 utilise un canal MBC dédié. Un canal MBC est, par exemple, composé d'un ou plusieurs canaux de trafic standard GSM. Un terminal 101 connecté à la station de base 114 est capable de détecter le canal MBC grâce, par exemple, à un parcourt systématique de tous les canaux de la station de base 102 jusqu'à la détection d'une séquence de bits particulière identifiant le canal MBC, car diffusée uniquement sur ce canal MBC. Le terminal 101 peut aussi trouver le canal MBC grâce à des informations émises sur la voie de balise de la station 102.

De préférence, le canal MBC est formé d'au moins deux canaux de trafic standards. De préférence toujours ces canaux de trafic standards correspondant à deux fenêtres temporelles consécutives dans une trame GSM. Une fenêtre temporelle est aussi souvent appelée un slot dans le domaine GSM. Par exemple la fenêtre 0 comporte deux types d'informations. Un premier type d'information permet d'identifier ce canal commettant le canal 0 du canal MBC, il s'agit par exemple de la diffusion d'une série de bits caractéristiques. Un deuxième type d'information correspond à une diffusion d'une description des séquences multimédia qui sont diffusées, via au moins un autre canal de trafic standard. Cet autre canal de trafic standard correspondrait alors à la fenêtre temporelle 1 de la trame GSM.

Dans une variante de l'invention le canal MBC utilise une trame GSM complète. La fenêtre temporelle 0 permet la détection, et donc le calage, sur le canal MBC, ainsi que l'obtention d'information sur les séquences multimédia qui sont différées dans les autres fenêtres temporelles. Les fenêtres temporelles 1 à 7 comportent des informations correspondant, par exemple, chacune à une séquence multimédia différentes.

La station 102 de base reçoit donc, du serveur 104 de diffusion, un message de diffusion comportant un paquet d'un kilo octet d'informations d'une séquence multimédia. La station de base découpe ce paquet d'information multimédia en paquets plus petits, d'une centaine de bits, et diffuse chacun de ces paquets plus petits dans des fenêtres temporelles du canal MBC. On voit ici que la diffusion, à des terminaux par la station de base, d'un paquet d'information multimédia requière l'emploi, en GSM, de dizaines de fenêtres temporelles. Les informations qui sont envoyées au terminal correspondent à l'identifiant du paquet d'information multimédia, ainsi qu'au paquet d'information multimédia lui-même.

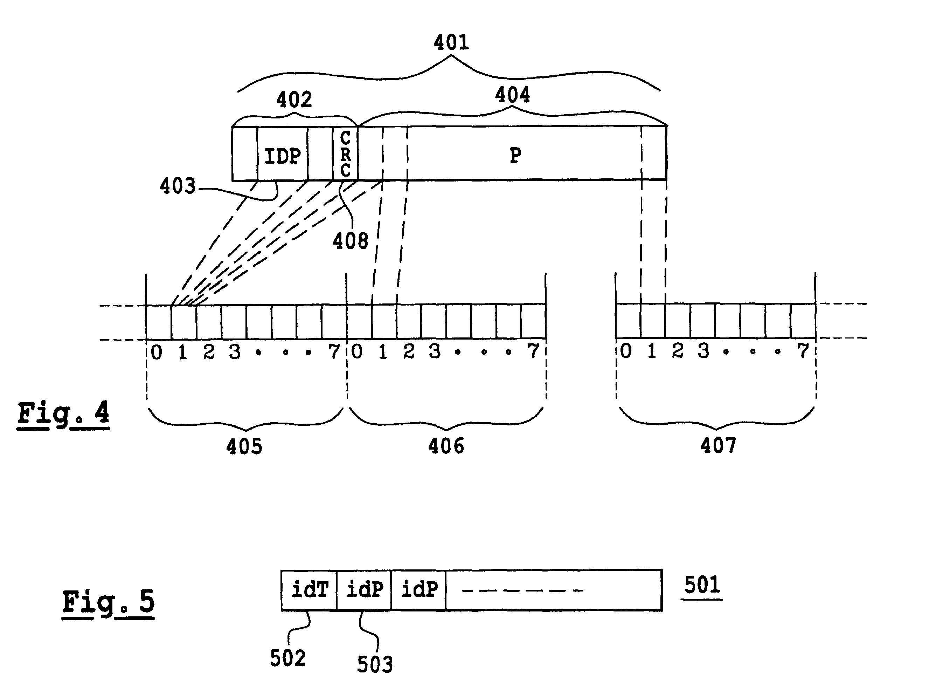

La figure 4 permet de visualiser un message 401 de diffusion. Ce message comporte un en-tête 402, qui lui-même comporte un champ 403 comportant l'identifiant d'un paquet d'information multimédia. Le message 401 comporte un corps 404 comportant le paquet d'information correspondant à la valeur du champ 403.

La figure 4 montre aussi des trames 405 à 407 GSM. Chaque trame est divisée, selon la norme GSM, en 8 fenêtres temporelles (slot) numérotées 0 à 7. Selon la description les fenêtres 0 et 1 sont utilisé pour réaliser le canal MBC. Les informations intéressant le terminal 101, au moins l'identifiant de paquet et le paquet lui-même, sont insérées dans les fenêtres 1 des trames GSM. Cette insertion est réalisée en découpant le corps 404 en morceau dont la taille est compatible avec les capacités de transport d'une fenêtre temporelle.

On passe à une étape 206 de réception de messages de statut par le serveur 104 de diffusion. En même temps qu'il diffuse des paquets d'informations multimédia, le serveur 104 reçoit des messages de statut lui indiquant quel paquet d'information multimédia ont été mal reçus. Un message de statut comporte plusieurs informations, par exemple enregistrées dans différents champs du message. Une première information identifie le message comme étant un message de statut. Une deuxième information est constituée d'une liste, d'un ou plusieurs identifiants de paquets d'informations multimédia. A la réception d'un message de statut on passe à une étape 207 dans laquelle le microprocesseur 106 met à jour la mémoire 111.

Un message 501 de statut comporte un identifiant 502 de l'émetteur du message de statut. Un message de statut comporte aussi un ou plusieurs identifiants 503 de paquets d'information multimédia. La combinaison de l'identifiant de l'émetteur du message, ainsi que d'un identifiant de paquet d'information contenue dans le message permet de sélectionner une ligne dans la table 111. Si cette ligne n'existe pas, elle est alors crée, et la valeur de la colonne 111 correspondant à cette ligne et incrémentée d'une unité. Si la valeur incrémentée est inférieure à un seuil, par exemple 5, alors on passe à une étape 208 de la mise à jour de la liste de diffusion. Dans l'étape 208 le microprocesseur 106 insère dans la mémoire 113 le numéro de paquet d'information à réémettre. Cette insertion est effectuée de manière à ce que ce paquet soit réémis dans des brefs délais. Par exemple cette insertion est faite en troisième position dans la liste des paquets à diffuser.

Si la colonne 111c comporte une valeur supérieure au seuil, alors l'identifiant de l'émetteur sera inséré dans la liste noire avec la date courante. On note, qu'à chaque réception d'un message de statut le microprocesseur 106 commence par parcourir la colonne 112a de la liste noire pour voir si l'émetteur du message de statut n'en fait pas partie. S'il en fait partie alors le message de statut est ignoré. C'est à dire que la liste des identifiants de paquets que comporte ce message de statut ne sera pas inséré dans la liste des paquets à diffuser.

L'inscription dans la liste noire n'est pas définitive. Elle peut être, par exemple, temporisé. Par exemple on considère qu'un terminal une fois entré dans la liste noire y reste pendant une heure. Ainsi, le microprocesseur 106 parcourt régulièrement la colonne 112b et compare son contenu à l'heure courante. Un terminal qui est entré dans cette liste noire depuis au moins une heure, alors il en sort. Le fait de sortir de la liste noire signifie que la ligne correspondant au terminal dans la mémoire 112 est supprimée.

De l'étape 208 on repasse à l'étape 205 c'est à dire que le serveur 104 poursuit la diffusion des paquets d'information multimédia.

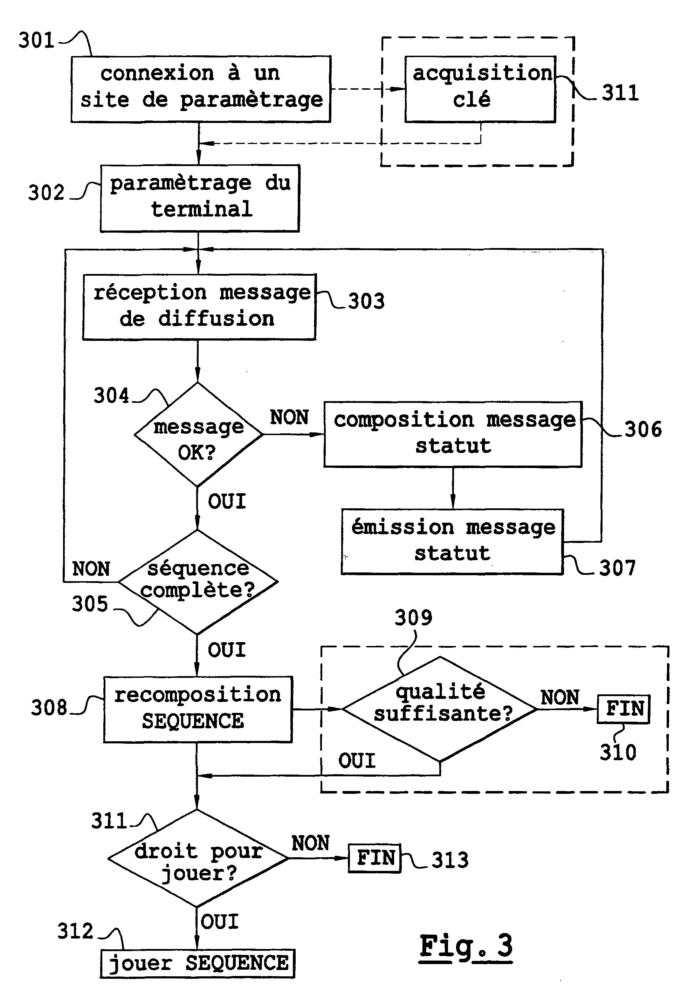

La figure 3 montre une étape 301 préliminaire de connexion d'un terminal du réseau cellulaire à un site de paramétrage. Un site de paramétrage est, dans un exemple préféré, un site au format WAP hébergé par le serveur 105. Lorsque l'utilisateur du terminal 101 se connecte sur ce site, il visualise une liste de séquence multimédia que diffuse le serveur 104 de diffusion, et donc qui peuvent être enregistrées par le terminal 101. L'utilisateur du terminal 101 peut alors parcourir cette liste, et sélectionner un certain nombre de séquences. Lorsqu'il valide sa sélection, le serveur 105 envoi un message de paramétrage au terminal 101. Ce message de paramétrage peut être envoyé sous forme d'un message court, d'un E-Mail ou toute autre forme.

L'étape 302 correspond au paramétrage du terminal, c'est à dire au traitement du message de paramétrage. Le message de paramétrage comporte les paramètres des séquences multimédia qui ont été sélectionnés par l'utilisateur du terminal 101. Ces paramètres sont initialement enregistrés dans la colonne 125c de la table 125 du serveur 105. Le serveur 105 se sert de la table 125 pour produire la liste des séquences multimédia qui est présentée au différents utilisateurs qui se connectent au serveur 105. Les paramètres, pour enregistrer une séquence multimédia sont, par exemple, des valeurs identifiant des paquets d'information : Une valeur minimale, et une valeur maximale. Ainsi tous les paquets ayant un identifiant compris entre la valeur minimale et la valeur maximale font partie de la séquence multimédia. Le microprocesseur 118 enregistre donc, dans une mémoire de paramétrage les intervalles d'identifiants de paquets correspondant aux séquences multimédia que souhaite enregistrer l'utilisateur du terminal 101. On passe à une étape 303 de réception des messages de diffusion.

Avant de passer à l'étape 303 le terminal 101 a préalablement détecté le canal MBC correspondant à la station de base sur laquelle il est connecté. Il effectue cela, par exemple, par une scrutation les canaux de la station 102 afin de détecter une séquence de bit identifiant le canal MBC. On rappel, que cette séquence de bit est diffusée sur la fenêtre temporelle 0 des trames GSM. L'écoute de toutes les fenêtres temporelles 0 des canaux de trafic de la station de base 102 permet donc de détecter le canal MBC. Le terminal 101 reçoit alors les informations de la fenêtre temporelle 0. Ces informations comportent en d'autre, des indications sur les fenêtres temporelles dans lesquelles sont diffusés les paquets d'informations multimédias correspondant à la séquence, ou aux séquences, d'informations multimédias que souhaite enregistrer l'utilisateur du téléphone 101. Le téléphone 101 n'a alors plus à écouter ces fenêtres temporelles.

Considérons le cas d'une fenêtre temporelle, toutes les fenêtres temporelles étant alors traitées de manière similaire. Le téléphone mobile écoute donc la fenêtre temporelle par exemple n° 1, à la recherche d'une séquence de bit indiquant le début de transmission d'un paquet d'information. Cela est utile, car on rappel qu'une fenêtre temporelle, dans la norme GSM, n'est pas capable de contenir l'ensemble d'un paquet d'information qui fait un kilo octet. Une fois cette séquence détectée, le terminal 101 enregistre les cent octets suivants transmis dans la fenêtre temporelle, ainsi que les quelques octets, seize ou trente-deux, correspondant à l'identifiant du paquet d'information. Dans notre exemple 80 trames GSM sont nécessaire pour obtenir les 1000 octets (=8000 bits) constituants un paquet. Le terminal enregistre aussi le code de redondance correspondant au paquet d'information.

On passe alors à une étape 304 de teste du message de diffusion. Dans l'étape 304 le terminal 101 recalcule le code de redondance à partir des mille octets du paquet d'information multimédia. Puis il compare le résultat de ce calcul au code de redondance qu'il a reçue. Si ces codes sont identiques on passe à l'étape 305 car cela signifie que le message d'information de diffusion à été correctement reçu, sinon on passe à une étape 306 de composition d'un message de statut car le message de diffusion n'a pas été correctement reçu.

Dans l'étape 306 le microprocesseur 118 compose un message de statut, ce message de statut comporte l'identifiant du terminal 101, par exemple un numéro de téléphone ou un numéro IMSI, ainsi que l'identifiant du paquet d'information qui a été mal reçu. Le message de statut peut être émis soit systématiquement dès qu'un paquet d'information multimédia est mal reçu, soit à intervalle régulier, soit dés qu'un certain nombre de paquets d'informations ont été mal reçus.

On passe à l'étape 307 d'émission du message de statut. De préférence le message de statut est émis comme une trame IP, avec le mode GPRS (Global Packet radio System ou système radio globale pour la transmission des paquets). L'adresse destinataire, du paquet de transport IP, correspond alors à l'adresse du serveur 104.

Dans l'étape 304, lorsqu'un paquet d'information est correctement reçu, le microprocesseur 117 met à jour une mémoire 128 de statut de réception des paquets d'informations. Cette mémoire 128 est structurée comme une table et comporte deux colonnes. Une première colonne 128a comporte des identifiant de paquet, une deuxième colonne 128b comporte un statut. Le statut est soit ok, soit ko. Le statut est ok lorsque le paquet à été correctement reçu, et ko lorsque le paquet n'a pas été correctement reçu.

Dans l'étape 305, le microprocesseur 118 parcoure la mémoire 128 ainsi que la mémoire de paramétrage. La mémoire de paramétrage permet de déterminer des extrémités, en tant que numéros d'identifiant, des séquences multimédia que souhaite enregistrer l'utilisateur du téléphone 101. Une fois qu'il a ces extrémités, le microprocesseur 118 parcoure la mémoire 128 pour s'assurer que l'ensemble des identifiants compris entre ces deux extrémités a un statut, que ce statut soit ok ou ko. Si un, ou plusieurs, paquets n'a pas de statut, on repasse de l'étape 305 à l'étape 303, c'est à dire qu'on continue à recevoir des messages de diffusion.

Dans le cas contraire on passe à l'étape 308 de recomposition de la séquence. Dans l'étape 308, le microprocesseur 118 met bout à bout le contenue des paquets d'informations qui ont été correctement reçu. Cela permet de reconstituer, dans le cas idéal, la séquence multimédia telle qu'elle est enregistrée sur la mémoire 109 du serveur 104.

Dans une variante, l'étape 308 est accompagnée d'une étape 309 de vérification de la qualité de la séquence multimédia reçue. Dans l'étape 309 le microprocesseur 118 compare, pour une séquence multimédia donnée, le nombre de paquets d'informations correctement reçues au nombre de paquets d'informations mal reçues. Si le nombre de paquets d'informations mal reçu représente une proportion trop importante, plus de 5%, de l'ensemble des paquets constituant la séquence multimédia, alors on considère que la qualité de la séquence multimédia reçue est insatisfaisante et on passe à une étape 310 de fin. Dans l'étape 310 on avertit l'utilisateur du terminal 101 que la séquence multimédia n'a pas pu être enregistrée. Dans le cas contraire, on passe à une étape 311, facultative, d'acquisition de droit pour jouer la séquence multimédia. Dans une variante on peut passer directement de l'étape 308 à l'étape 311. Dans l'étape 311, l'utilisateur du terminal 101 se connecte à un serveur du type du serveur 105, pour acquérir des droits, et éventuellement une clef de décryptage, qui permet de visualiser, ou d'écouter, la séquence multimédia qui vient d'être enregistrée.

L'étape 311 est utile, dans le cas où un opérateur prévoit d'enregistrer, à l'insu de l'utilisateur du terminal 101, des séquences multimédia dans le terminal 101. Cet enregistrement se fait en générale de nuit. L'utilisateur du terminal 101 a alors accès à la liste des séquences multimédia qui sont enregistrées dans son terminal, et peut se connecter à un site pour acquérir des droits lui permettant de visualiser ces séquences multimédia. Il s'agit d'un service supplémentaire offert par l'opérateur du réseau cellulaire à ses utilisateurs.

Si l'utilisateur acquiert les droit, on passe à une étape 312 où l'utilisateur peut accéder à la séquence multimédia (en clair). C'est à dire l'utilisateur visualise une séquence vidéo sur l'écran 120 de son terminal ou écoute une séquence audio via un dispositif acoustique de son terminal.

Dans le cas contraire, l'utilisateur n'a pas acquis les droits, on passe à une étape 313 de fin.

Dans une variante de l'invention, l'étape 309 suit l'étape 301. C'est à dire que l'acquisition des droits de visualisations se fait en même temps que la connexion au site de paramétrage du terminal. Les séquences multimédia sont donc enregistrées dans une mémoire du terminal 101. L'utilisateur du terminal 101 peut avoir accès à cette mémoire soit pour lire la séquence multimédia, soit pour l'effacer.

Dans une variante de l'invention, l'utilisateur du terminal 101 peut aussi avoir accès à cette mémoire pour transférer son contenu sur un autre support, par exemple, un ordinateur personnel.

Cependant, on note, que les séquences multimédia sont transmises pour être visualisées sur un écran d'un terminal 101. Un tel écran a en générale une faible résolution, dans la pratique de l'ordre de 160 par 160 éléments d'images. L'intérêt du transfert du contenu de la mémoire du terminal 101 sur un ordinateur personnel est donc limité. Un avantage que cela présente cependant, est que les capacités de stockage d'un ordinateur personnel sont bien plus importantes, et bien moins coûteuse, que celles du terminal 101. L'utilisateur du terminal 101 peut donc avoir, sur son ordinateur personnel, une bibliothèque de séquences multimédia qu'il peut charger, et décharger, à volonté sur son terminal afin de les visualiser.

On peut aussi envisager, avec l'enseignement de l'invention, de réaliser un dispositif qui permet de recevoir sur le terminal des séquences ayants une définition suffisante pour être visualisées sur l'écran d'un ordinateur personnel. Dans ce cas se serait l'autorisation de transférer la séquence vers l'ordinateur personnel qui serait soumise à l'acquisition d'un droit. Dans ce cas toujours la séquence ne sera alors pas visualisable sur l'écran du terminal.

L'avantage de l'enseignement de l'invention est qu'il permet d'enregistrer des fichiers, de tailles importantes, sur des terminaux d'un réseau cellulaire en économisant des ressources radio. En effet, une même ressource radio, c'est à dire un canal de trafic, est utilisé pour l'ensemble des terminaux connectés à une station de base. A l'heure actuelle, si plusieurs terminaux connectés à une station de base souhaitent télécharger un même fichier, cela va mobiliser autant de canaux qu'il y à de téléphones connectés à la station de base.

Dans la description qui précède, le canal MBC est réalisé en utilisant un certain nombre de canaux de trafic de la norme GSM. Cet enseignement peut être transposé à d'autres normes, par exemple, UMTS, PCS, DCS, et autres. Il s'agit en faite, de réaliser une liaison point multis-points entre le serveur 104 et des terminaux d'un réseau cellulaire.

Dans la description la réalisation de la liaison point à point entre le terminal 101 et le serveur 104 pour l'envoi de messages de statut est réalisé via une couche de transport IP et une couche physique GPRS. Cependant on peut envisager d'autres modes de transmission de message de statut, par exemple via un message SMS.

## Revendications

1. Procédé de diffusion de séquences (109.1...109.N) multimédia dans un réseau (102-103) cellulaire pour terminaux (101) mobiles dans lequel :
- **un serveur (104) de diffusion** produit (201) des paquets d'information multimédia à partir d'une séquence (109.1) multimédia,
**caractérisé en ce que** :
- le serveur (104) diffuse (205), vers des terminaux du réseau cellulaire, des messages (401) d'informations multimédia, via un canal MBC dédié et identifiable via une séquence particulière présente uniquement sur ce canal, ces messages d'informations comportant un paquet (404) d'information multimédia,
- le serveur (104) reçoit (206), un message, émis par un terminal du réseau cellulaire, de statut de réception d'un paquet d'information multimédia.

2. Procédé selon la revendication 1, **caractérisé en ce que** le message (501) de statut comporte un identifiant (502) du terminal qui l'a émis.

3. Procédé selon l'une des revendications 1 ou 2, **caractérisé en ce que** le message de statut comporte des informations (503) permettant de déterminer qu'un paquet d'information multimédia a été mal reçu.

4. Procédé selon l'une des revendications 1 à 3, **caractérisé en ce que le serveur (104)** enregistre le contenu des messages de statut dans une mémoire (111) du serveur de diffusion.

5. Procédé selon l'une des revendications 1 à 4, **caractérisé en ce que le serveur (104)** rediffuse les messages d'information multimédia signalés comme ayant été mal reçu.

6. Procédé selon l'une des revendications 1 à 5, **caractérisé en ce qu'**un message de statut similaire, même identifiant d'émetteur et même identifiant de paquet d'information, est ignoré, par le serveur de diffusion, au-delà d'un nombre prédéfini d'émission de ce message de statut.

7. Procédé selon l'une des revendications 1 à 6, **caractérisé en ce que** un message d'information multimédia comporte des moyens (408) permettant au terminal recevant le message d'information de s'assurer de la validité du message d'information.

8. Procédé selon l'une des revendications 1 à 7, **caractérisé en ce que** le contenu d'un message d'information est encrypté (204) avant que le message soit diffusé.

9. Procédé de réception de séquences (109.1...109.N) multimédia dans un réseau (102-103) cellulaire pour terminaux mobiles **caractérisé en ce que** :
- un terminal (101) mobile connecté au réseau identifie, un canal MBC dédié la diffusion de séquences multimédia et **identifiable via une séquence particulière qu'il comporte,**
- **le terminal** enregistre (303) dans une mémoire du terminal connecté au réseau cellulaire un paquet d'information multimédia, reçu via le réseau cellulaire, et plus particulièrement reçu via le canal MBC dédié de ce réseau cellulaire, le paquet d'information étant contenu dans un message d'information **émis par un serveur (104) de diffusion,**
- **le terminal (101)** vérifie (304) l'intégrité du paquet d'information multimédia enregistré,
- **le terminal (101)** émet (307), vers le serveur de diffusion, un message (501) de statut pour un paquet d'information multimédia mal reçu.

10. Procédé selon la revendication 9, **caractérisé en ce que** le message de statut comporte un identifiant (502) du terminal émetteur, et un identifiant (503) du paquet d'information multimédia mal reçu.

11. Procédé selon l'une des revendications 9 ou 10, **caractérisé en ce que** :
- **le terminal (101)** se connecte (301), à un serveur de présentation d'informations multimédia diffusées,
- **le terminal (101)** émet (301) une requête, au serveur de présentation d'information multimédia diffusées, pour obtenir des paramètres pour enregistrer des paquets d'information multimédia.

12. Procédé selon l'une des revendications 9 à 11, **caractérisé en ce que** :
- **le terminal (101)** recompose (308) une séquence multimédia à partir du contenu de plusieurs paquets d'information multimédia enregistrés,
- **le terminal (101)** joue (312) la séquence multimédia.

13. Procédé selon l'une des revendications 9 à 12, **caractérisé en ce que** :
- **le terminal (101)** obtient (311) une clé de décryptage pour pouvoir décrypter une séquence multimédia,
- **le terminal (101)** utilise la clé obtenue pour décrypter la séquence multimédia.

14. Procédé selon la revendication 13, **caractérisé en ce que** la clé de décryptage est obtenue avant le début de l'enregistrement du premier message d'information de la séquence multimédia correspondant à la clé de décryptage.

15. Procédé selon la revendication 13, **caractérisé en ce que** la clé de décryptage est obtenue après une recomposition, satisfaisante (309), de la séquence multimédia correspondant à la clé de décryptage.

16. Procédé selon l'une des revendications 1 à 15, **caractérisé en ce qu'**un message de statut est acheminé jusqu'au serveur de diffusion selon un protocole de routage de type Protocole Internet.

17. Utilisation du procédé selon l'une, ou plusieurs, des revendications 1 à 16, **caractérisé en ce que** :
- **le serveur** (104) de diffusion effectue la diffusion via au moins un canal de communication, **dédié et identifiable via une séquence particulière**, du réseau cellulaire,
- **le terminal** (101) émet des messages de statut via un support physique de type GPRS, et selon un protocole de type IP.

## Claims

1. Process for broadcasting multimedia sequences (109.1 ... 109.N) in a cellular network (102 - 103) for mobile terminals (101) in which:
- a broadcast server (104) produces (201) multimedia data packets from a multimedia sequence (109.1),
***characterised by** the fact that*:
- the server (104) broadcasts (205) multimedia data messages (401), to terminals of the cellular network, via a dedicated MBC channel identifiable via a particular sequence only present on this channel, these data messages including a packet (404) of multimedia data,
- the server (104) receives (206) a message, transmitted by a terminal of the cellular network, of receipt status of a multimedia data packet.

2. Process as described in claim 1, ***characterised by** the fact that* the status message (501) includes an identifier (502) of the terminal which transmitted it.

3. Process as described in one of claims 1 or 2, ***characterised by** the fact that* the status message includes data (503) permitting determination that a multimedia data packet has been incorrectly received.

4. Process as described in one of claims 1 to 3, **characterised by** the fact that the server (104) stores the contents of the status messages in a memory (111) of the broadcast server.

5. Process as described in one of claims 1 to 4, ***characterised by** the fact that* the server (104) rebroadcasts the multimedia data messages indicated as having been incorrectly received.

6. Process as described in one of claims 1 to 5, ***characterised by** the fact that* a similar status message, with the same transmitter identifier and same data packet identifier, is ignored by the broadcast server, beyond a predefined number of transmissions of this status message.

7. Process as described in one of claims 1 to 6, ***characterised by** the fact that* a multimedia data message includes means (408) allowing the terminal receiving the data message to ascertain the validity of the data message.

8. Process as described in one of claims 1 to 7, ***characterised by** the fact that* the content of a data message is encrypted (204) before the message is broadcast.

9. Process for reception of multimedia sequences (109.1 ... 109.N) in a cellular network (102 - 103) for mobile terminals ***characterised by** the fact that*:
- a mobile terminal (101) connected to the network identifies an MBC channel dedicated to the broadcast of multimedia sequences and identifiable via a particular sequence which it includes,
- the terminal stores (303) in a memory of the terminal connected to the cellular network a multimedia data packet, received via the cellular network, and more particularly received via the dedicated MBC channel of this cellular network, the data packet being contained in a data message transmitted by a broadcast server (104),
- the terminal (101) verifies (304) the integrity of the stored multimedia data packet,
- the terminal (101) transmits (307), to the broadcast server, a status message (501) for an incorrectly received multimedia data packet.

10. Process as described in claim 9, ***characterised by** the fact that* the status message includes an identifier (502) of the transmitting terminal and an identifier (503) of the incorrectly received multimedia data packet.

11. Process as described in one of claims 9 or 10, **characterised by** the fact that:
- the terminal (101) connects (301) to a server for presentation of broadcast multimedia data,
- the terminal (101) transmits (301) a request to the server for presentation of broadcast multimedia data, to obtain parameters to store multimedia data packets.

12. Process as described in one of claims 9 to 11, **characterised by** the fact that:
- the terminal (101) rebuilds (308) a multimedia sequence from the contents of a plurality of stored multimedia data packets,
- the terminal (101) plays (312) the multimedia sequence.

13. Process as described in one of claims 9 to 12, **characterised by** the fact that:
- the terminal (101) obtains (311) a decryption key to be able to decrypt a multimedia sequence,
- the terminal (101) uses the obtained key to decrypt the multimedia sequence.

14. Process as described in claim 13, ***characterised by** the fact that* the decryption key is obtained before the start of storing the first data message of the multimedia sequence corresponding to the decryption key.

15. Process as described in claim 13, ***characterised by** the fact that* the decryption key is obtained after satisfactory rebuilding (309) of the multimedia sequence corresponding to the decryption key.

16. Process as described in one of claims 1 to 15, ***characterised by** the fact that* a status message is routed to the broadcast server in accordance with a routing protocol of Internet Protocol type.

17. Use of the process as described in one or more of claims 1 to 16, ***characterised by** the fact that*:
- the broadcast server (104) broadcasts via at least one communication channel, which is dedicated and identifiable via a particular sequence, of the cellular network,
- the terminal (101) transmits status messages via a physical support of GPRS type and in accordance with a protocol of IP type.

## Patentansprüche

1. Verfahren zur Sendung von Multimediasequenzen (109.1 .. 109.N) in einem zellularen Mobilfunknetz (102-103) für mobile Endgeräte (101), bei dem
- ein Sendeserver (104) aus einer Multimediasequenz (109.1) Multimedia-Informationspakete erzeugt (201),
**dadurch gekennzeichnet, dass**
- der Server (104) über einen dedizierten und über eine lediglich auf diesem Kanal vorhandene besondere Sequenz erkennbaren MBC-Kanal Multimedia-Informationsnachrichten (401) zu Endgeräten des zellularen Mobilfunknetzes sendet, wobei diese Informationsnachrichten ein Multimedia-Informationspaket (404) enthalten;
- der Server (104) eine von einem Endgerät des zellularen Mobilfunknetzes gesendete Nachricht über den Status des Empfangs eines Multimedia-Informationspakets erhält (206).

2. Verfahren nach Anspruch 1, **dadurch gekennzeichnet, dass** die Statusnachricht (501) eine Kennung (502) des Endgeräts enthält, von dem sie gesendet wurde.

3. Verfahren nach einem der Ansprüche 1 oder 2, **dadurch gekennzeichnet, dass** die Statusnachricht Informationen (503) enthält, mit denen festgestellt werden kann, dass ein Multimedia-Informationspaket schlecht empfangen wurde.

4. Verfahren nach einem der Ansprüche 1 bis 3, **dadurch gekennzeichnet, dass** der Server (104) den Inhalt der Statusnachrichten in einem Speicher (111) des Sendeservers speichert.

5. Verfahren nach einem der Ansprüche 1 bis 4, **dadurch gekennzeichnet, dass** der Server (104) die als schlecht empfangen angezeigten Multimedia-Informationsnachrichten erneut sendet.

6. Verfahren n ach e inem d er A nsprüche 1 b is 5, **dadurch gekennzeichnet, dass** eine ähnliche Statusnachricht mit gleicher Senderkennung und gleicher Informationspaket-Kennung über eine vorbestimmte Sendeanzahl dieser Statusnachricht hinaus vom Mehrfachsendungsserver außer Acht gelassen wird.

7. Verfahren n ach e inem der Ansprüche 1 b is 6, **dadurch gekennzeichnet, dass** eine Multimedia-Informationsnachricht Mittel (408) enthält, mit denen das die Informationsnachricht empfangende Endgerät sich der Gültigkeit der Informationsnachricht vergewissern kann.

8. Verfahren nach einem der Ansprüche 1 bis 7, **dadurch gekennzeichnet, dass** der Inhalt einer Informationsnachricht vor der Sendung der Nachricht verschlüsselt wird (204).

9. Verfahren zum Empfangen von Multimediasequenzen (109.1 ... 109.N) in einem zellularen Mobilfunknetz (102-103) für mobile Endgeräte (101), **dadurch gekennzeichnet, dass**
- ein an das Mobilfunknetz angeschlossenes mobiles Endgerät (101) einen für die Sendung von Multimediasequenzen dedizierten MBC-Kanal identifiziert, welches über eine besondere, in ihm enthaltene Sequenz identifizierbar ist;
- das Endgerät in einem Speicher des an das zellulare Mobilfunknetz angeschlossenen Endgeräts ein Multimedia-Informationspaket speichert, das über das zellulare Mobilfunknetz und insbesondere über den dedizierten MBC-Kanal dieses zellularen Mobilfunknetzes empfangen wird, wobei das Informationspaket in einer von einem Sendesserver (104) gesendeten Nachricht enthalten ist;
- das Endgerät (101) die Unversehrtheit des gespeicherten Multimedia-Informationspakets überprüft (104);
- das Endgerät (101) für ein schlecht empfangenes Multimedia-Informationspaket eine Statusnachricht (501) zum Sendeserver sendet (507).

10. Verfahren nach Anspruch 9, **dadurch gekennzeichnet, dass** die Statusnachricht eine Kennung (502) des sendenden Endgeräts und eine Kennung (503) des schlecht empfangenen Multimedia-Informationspakets enthält.

11. Verfahren nach einem der Ansprüche 9 oder 10, **dadurch gekennzeichnet, dass**
- das Endgerät (101) sich an einen Server zur Präsentation von mehrfach gesendeten Multimediainformationen anschließt (301);
- das Endgerät (101) eine Anfrage zum Server zur Präsentation von mehrfach gesendeten Multimediainformationen sendet (301), um Parameter zur Speicherung der Multimedia-Informationspakete zu erhalten.

12. Verfahren nach einem der Ansprüche 9 bis 11, **dadurch gekennzeichnet, dass**
- das Endgerät (101) eine Multimediasequenz aus dem Inhalt mehrerer gespeicherter Multimedia-Informationspakete wieder zusammenstellt;
- das Endgerät (101) die Multimediasequenz abspielt (312).

13. Verfahren nach einem der Ansprüche 9 bis 12, **dadurch gekennzeichnet, dass**
- das Endgerät (101) einen Entschlüsselungsschlüssel zur Entschlüsselung einer Multimediasequenz erhält (311);
- das Endgerät (101) den erhaltenen Schlüssel zur Entschlüsselung der Multimediasequenz benutzt.

14. Verfahren nach Anspruch 13, **dadurch gekennzeichnet, dass** der Entschlüsselungsschlüssel vor dem Beginn der Speicherung der ersten Informationsnachricht der Multimediasequenz erhalten wird, welche dem Entschlüsselungsschlüssel entspricht.

15. Verfahren nach Anspruch 13, **dadurch gekennzeichnet, dass** der Entschlüsselungsschlüssel nach einer zufrieden stellenden (309) Wiederzusammenstellung der Multimediasequenz erhalten wird, welche dem Entschlüsselungsschlüssel entspricht.

16. Verfahren nach einem der Ansprüche 1 bis 15, **dadurch gekennzeichnet, dass** eine Statusnachricht bis zum Sendeserver gemäß einem Routing-Protokoll des Typs Internet-Protokoll weitergeleitet wird.

17. Verwendung des Verfahrens gemäß einem oder mehreren der Ansprüche 1 bis 16, **dadurch gekennzeichnet, dass**
- der Sendeserver (104) über mindestens einen Kommunikationskanal des zellularen M obilfunknetzes s endet, welcher dediziert und über eine besondere Sequenz identifizierbar ist;
- das Endgerät (101) Statusnachrichten über einen physikalischen Träger des Typs GPRS und gemäß einem Protokoll des Typs IP sendet.
